# EUROPÄISCHE PATENTSCHRIFT

(11) **EP 2 730 628 B1**
(45) Veröffentlichungstag und Bekanntmachung des Hinweises auf die Patenterteilung: **14.01.2015**
(21) Anmeldenummer: 13187117.0
(22) Anmeldetag: 02.10.2013
(51) Int. Cl.: C09J 7/02, G02F 1/00, B32B 5/18, B32B 7/06

(54) **Flächengebilde**
Area-measured material
Structures plates

(30) Priorität: 13.11.2012 EP 12192312
(43) Veröffentlichungstag der Anmeldung: 14.05.2014
(73) Patentinhaber: RAFI GmbH & Co. KG, 88276 Berg (DE)
(72) Erfinder: Voth, Michael, 88214 Ravensburg (DE)
(74) Vertreter: Engelhardt & Engelhardt

(56) Entgegenhaltungen:
- WO-A1-98/21285
- WO-A1-99/31193
- WO-A1-99/31407
- WO-A2-2007/032902
- WO-A2-2008/019994
- US-A1- 2008 107 887

## Beschreibung

Die Erfindung bezieht sich auf ein Flächengebilde zum Verbinden und Befestigen von zwei gegenüberliegenden Oberflächen zweier Bauteile nach dem Oberbegriff des Patentanspruches 1.

Derartige Flächengebilde werden auch als Klebefolie oder Klebestreifen eingesetzt und sind beispielsweise aus der DE 3 331 016 C2 zu entnehmen. Durch solche Flächengebilde, Klebefolien oder Klebestreifen soll eine Klebeverbindung entstehen, durch die zwei Oberflächen zweier Bauteile, die parallel und fluchtend zueinander verlaufen, lösbar verbunden sein.

Es hat sich jedoch nachteiligerweise herausgestellt, dass solche Flächengebilde beim Aufbringen einer in Längsrichtung des Flächengebildes ausgerichteten Zugkraft reißen. Durch die Zugkraft wird nämlich die Dicke des Flächengebildes reduziert, wodurch zwar die Klebeverbindung zwischen diesem und dem jeweiligen Bauteil gelöst werden soll, jedoch die erhebliche Gefahr besteht, dass diese Flächengebilde reißen, bevor diese vollständig entfernt sind. Solche Klebeverbindungen sind daher für die Arretierung von hochwertige Bauteilen, beispielsweise für die Verbindung von einer Blende mit einem Display, ungeeignet, denn wenn beim Lösen des Flächengebildes dieses reißt, kann dieses nicht mehr entfernt werden, so dass die beiden Bauteile weiterhin fest miteinander fixiert sind.

Weiterhin ist nachteilig, dass die beschriebenen Flächengebilde nur in Längsrichtung gelöst werden können. Gerade in technischen Produkten ist aber zumeist dieser Bewegungsfreiraum durch weitere Bauteile oder Geometrien verbaut, wodurch ein Lösen in der geforderten Art nicht gegeben ist.

Insbesondere während der Montage von solchen hochwertigen Bauteilen hat es sich gezeigt, dass oftmals eine Demontage zu erfolgen hat, um einzelne elektrische Komponente zu reparieren oder zu ersetzen, die bei der Montage beschädigt worden sind. Üblicherweise werden daher für die Verbindung von Blenden und Displays lösbare Schraubbefestigungen eingesetzt oder aber die klebenden Flächengebilde weisen eine derart hohe Klebefestigkeit auf, die unmittelbar nach dem Anbringen nicht mehr zerstörungsfrei zu lösen ist. Dies führt jedoch zu Beschädigungen an dem jeweiligen Bauteil, so dass solche bekannten Klebestreifen für die Arretierung von hochwertigen Bauteilen ungeeignet und unpraktisch sind, da diese bei Beschädigungen von einzelnen elektrischen Komponenten, die zur Funktion des elektrischen Gerätes benötigt werden, oftmals entsorgt werden müssen.

Es ist daher Aufgabe der Erfindung, ein Flächengebilde der eingangs genannten Gattung bereit zu stellen, durch das zum einen eine zuverlässige und dauerhafte Klebeverbindung zwischen zwei Bauteilen entsteht, die in einer möglichst lang bemessenen Zeitspanne lösbar ist, und die zum anderen beim Lösen der Klebeverbindung derart ausgestaltet ist, dass das Flächengebilde in einem vorgegebenen definierten Bereich aufreißt, um die Bauteile voneinander trennen zu können. Weiterhin ist die Aufgabe der Erfindung die Bewegung zum Lösen der Verbindung auch in senkrechter Richtung zu den Klebeflächen zu ermöglichen, um die Lösefunktion im Umfeld benachbarter Bauteile oder Konturen sicher zu stellen.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in dem Flächengebilde eine reißfeste Trennfolie angeordnet ist, ist gewährleistet, dass beim Ziehen an dem Flächengebilde in beliebiger, vorzugsweise in Querrichtung, eine Auftrennung der benachbart angeordneten Klebeschichten entsteht, so dass zunächst die miteinander zu verbindenden Bauteile voneinander gelöst werden können.

Dazu ist vorgesehen, dass beim Ziehen des Flächengebildes in dessen Querrichtung die innere Verbindung im Flächengebilde zerstört wird. Dadurch besteht zwischen den zwei miteinander fixierten Bauteilen-keine--mechanische Verbindung mehr, so dass dadurch die zwei Bauteile voneinander getrennt werden können.

Besonders zweckmäßig ist es, wenn die zur Zerstörung des Flächenverbunds vorgesehenen Schichten in Form von Schaumstoffen wie z.B. PE-Schaum ausgebildet werden. Durch die Auswahl des Schaummaterials und dessen Dichte kann insbesondere die zum Lösen benötigte Kraft beeinflusst werden. Weitere geeignete Typen sind PUR-Schäume.

Zur Verbindung im Flächengebilde und zu den Bauteilen werden Haftklebstoffe verwendet, die eine hohe Klebeeigenschaft aufweisen. Hierzu ist besonders Acrylat geeignet. Für einige Anwendungen sind Kautschuk-Klebstoffe besonders vorteilhaft.

Die Trennfolie ist üblicherweise aus einem PET-Kunststoff hergestellt. Es eignen sich aber auch weitere Folienmaterialien mit hoher Reißfestigkeit wie PC oder PA-Folien.

In der Zeichnung ist ein Ausführungsbeispiel eines erfindungsgemäßen Flächengebildes dargestellt, das nachfolgend näher erläutert ist. Im Einzelnen zeigt:
- Figur 1: ein Flächengebilde, das zwischen zwei Bauteilen zu deren lösbaren Verbindung angeordnet ist, mit zwei zur Zerstörung vorgesehene Schaumschichten die an ihrer Oberfläche jeweils eine Klebeschicht aufweist, wobei die im Flächengebilde innenliegende Klebeschicht mit einer reißfesten Trennfolie verbunden ist und die im Flächengebilde außenliegende Klebeschicht mit den zu befestigten Bauteilen verbundenen ist.
- Figur 2: ein Anwendungsbeispiel für die Anordnung des Flächengebildes gemäß Figur 1,
- Figur 3: das Flächengebilde gemäß Figur 2 zu Beginn der Lösebewegung,
- Figur 4: das Flächengebilde gemäß Figur 2 während der Lösebewegung in direkter Umgebung benachbarter Bauteile erfolgen,
- Figur 5: das Flächengebilde gemäß Figur 1, in dem die jeweilige Schaumschicht aus einem PE-Schaum besteht, die jeweils zwei Haftklebstoffflächen aus Acryl aufweist und mittig eine PET-Trennfolie beinhaltet,
- Figur 6: das Flächengebilde gemäß Figur 1 nachdem durch Einleitung einer Zugkraft dieses zur Auflösung der Klebeverbindung in der Schaumschicht zerstört wurde.

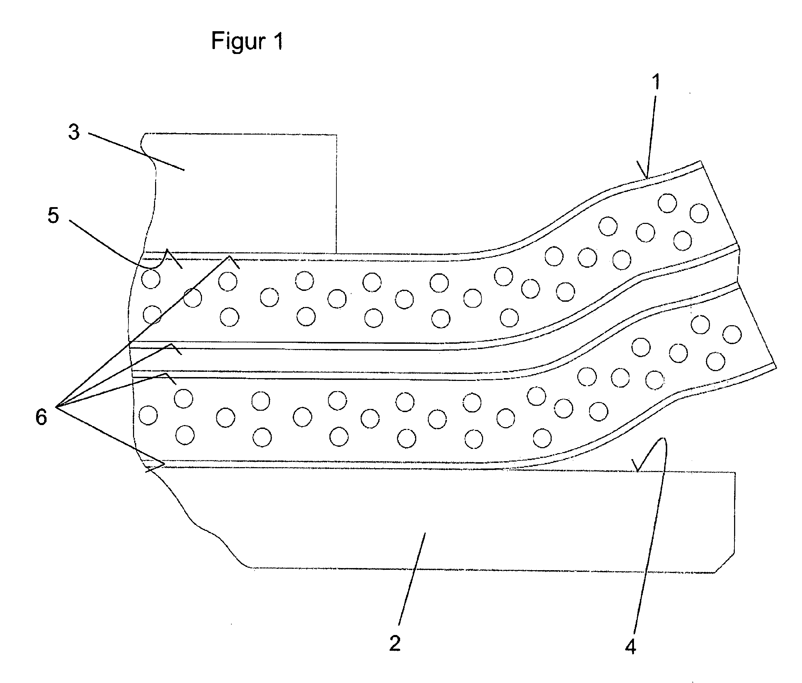

In Figur 1 ist ein Flächengebilde 1 zu entnehmen, durch das zwei Bauteile 2 und 3 dauerhaft mittels einer Klebeverbindung 6 miteinander fixiert werden sollen. Die Bauteile 2 und 3 sind technisch hochwertig und können insbesondere als Blende und Display ausgestaltet sein, für dessen Aufbau zu einem elektrischen Gerät weitere elektrische Komponenten vorzusehen sind. Während der Montage der Bauteile 2 und 3 werden diese zunächst an den beiden gegenüberliegenden Oberflächen 4 und 5 miteinander durch das Flächengebilde 1 fixiert und anschließend werden weitere Komponenten, beispielsweise Leiterplatten, Sensoren und dergleichen, verbaut. Bei solchen Montageschritten kann es zu Beschädigungen an diesen Komponenten kommen, die dazu führen, dass die gesamte Baueinheit fehlerhaft ist. Es hat sich folglich herausgestellt, dass es erforderlich ist, während der Montage die Bauteile 2 und 3 voneinander lösen zu können, um die beschädigten Leiterplatten, Sensoren und dergleichen auswechseln zu können. Außerdem kann es erforderlich sein, dass während der Gebrauchsdauer eines Gerätes die Bauteile 2 oder 3 ausgewechselt werden müssen und somit voneinander zu lösen sind.

Zu diesem Zweck ist das Flächengebilde 1 in einer besonderen Art und Weise aufgebaut und ausgestaltet, denn im Wesentlichen besteht das Flächengebilde 1 aus einer Trennfolie 11, die zwischen zwei Klebeschichten 12 und daran anschließenden Schaumschichten 13 angeordnet ist. Weitere Klebeschichten 12 verbinden diesen Aufbau mit den Bauteilen 2, 3. Die Klebeschichten 12 können dabei gleiche oder unterschiedliche Adhäsionskraftverteilungen aufweisen. Solche Klebeverteilungen können beispielsweise durch unterschiedliche Klebstoffe erzielt werden.

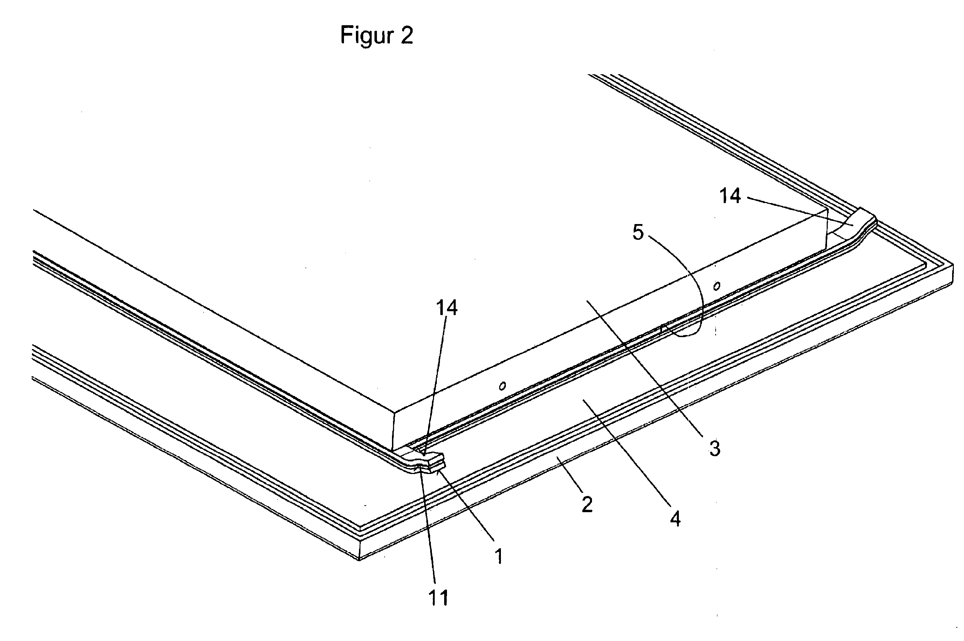

In Figur 2 ist zudem ein konkreter Anwendungsfall für die Verbindung der beiden Bauteile 2 und 3, die in Form einer Blende und eines Displays ausgestaltet sind, zu entnehmen. Die Flächengebilde 1 sind entlang den Kanten der Bauteile 2 und 3 angeordnet. An jedem der Flächengebilde 1 ist eine aus der Blende 2 und dem Display 3 überstehende Haltelasche 14 angebracht, durch die die Zugkraft 15 auf das jeweilige Flächengebilde 1 übertragen ist, Die Haltelasche 14 kann manuell oder mit Hilfe von Werkzeugen gegriffen werden. Sobald über die Haltelasche 14 eine ausreichend große Zugkraft 15 aufgebracht wird, die vorzugsweise in Querrichtung des Flächengebildes 1 verläuft, wird der innere Verbund des Flächengebildes im Bereich der Schaumflächen zerstört, so dass die Verbindung zwischen den Bauteilen gelöst ist. Da sich in den zerstörten Schaumschichten kein klebewirksames Material befindet, können sich keine neuen Klebeverbindungen mehr bilden.

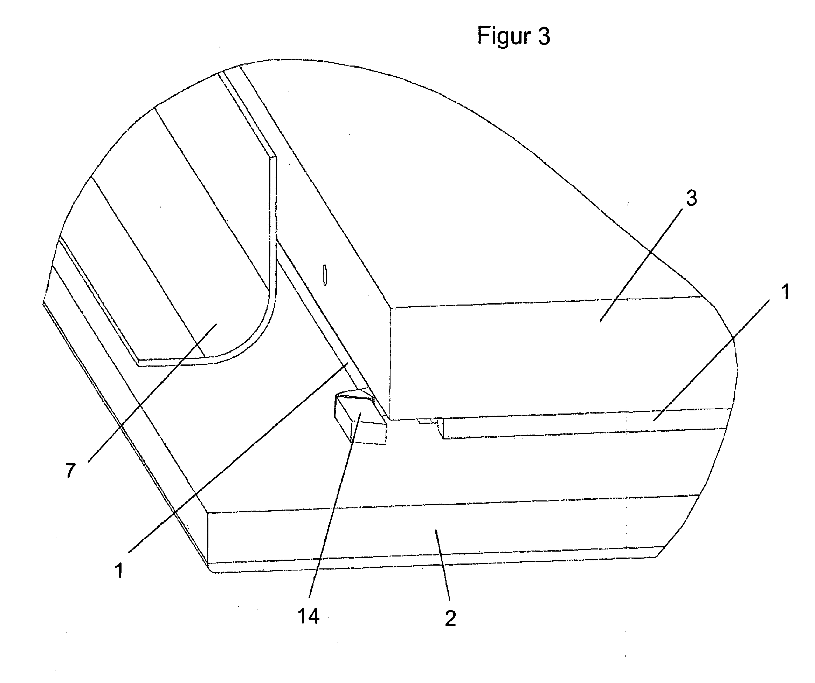

In Figur 3 ist das Flächengebilde 1 zu Beginn der Lösebewegung abgebildet. Dabei kann das Flächengebilde 1 an der Haltelasche 14 zunächst in beliebiger Richtung seitlich zwischen den Bauteilen 2 und 3 herausgezogen werden.

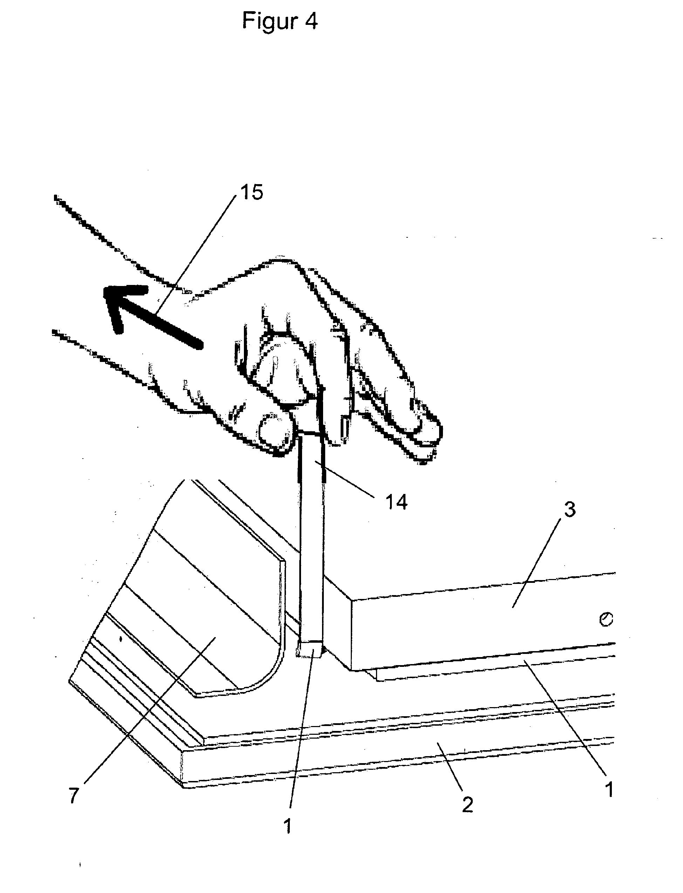

In Figur 4 ist das Flächengebilde 1 während der Lösebewegung zu entnehmen. Die Bewegung erfolgt quer bzw. senkrecht zu den Klebeflächen. Da die Klebekräfte zwischen im Flächengebilde 1 bzw. zu den Bauteilen 2, 3 hin größer sind als der innere Zusammenhalt der Schaumschicht 13, wird das Flächengebilde 1 innerhalb des Schichtaufbaus in der Schaumschicht 13 zerstört. Diese Lösebewegung kann auch in direkter Umgebung benachbarter Bauteile 2, 3 erfolgen.

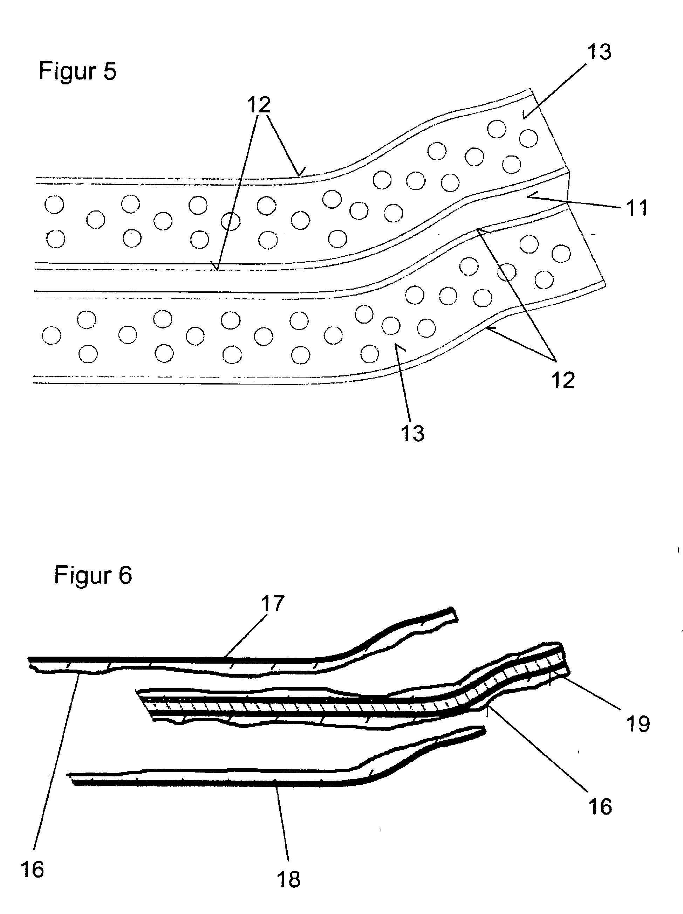

In Figur 5 ist das Flächengebildes 1 abgebildet, das einen siebenschichtigen Aufbau aufweist. Die Klebeschichten 12 bestehen dabei aus einer Acrylklebstoffschicht, die jeweilige Schaumschicht 13 besteht aus einem PE-Schaum. Weiterhin umfasst das Flächengebilde mittig zwischen zwei dieser Klebeschichten 12 eine PET-Trennfolie 11 welche eine besonders hohe Reißfestigkeit aufweist.

Figur 6 zeigt das Flächengebilde nachdem durch Einleitung einer Zugkraft dieses zur Auflösung der Klebeverbindung in der Schaumschicht 2 zerstört wurde. Dabei verbleibt ein Rest 17 des Flächenverbunds 1 an Bauteil 3 und ein Rest 18 des Flächenverbunds 1 an Bauteil 2. Der Rest 19 des Flächenverbunds 1 bestehend im Wesentlichen aus der Trennfolie 11 wird bei diesem Vorgang zwischen den Bauteilen 2, 3 herausgetrennt.

## Patentansprüche

1. Flächengebilde (1) zum Verbinden und Befestigen von zwei gegenüberliegenden Oberflächen (4, 5) zweier Bauteile (2, 3), bestehend aus zwei der jeweiligen Oberfläche (4, 5) zugewandten Schaumschicht (13), die jeweils eine Klebefläche (12) aufweisen, durch die eine Klebeverbindung (6) zwischen dem Flächengebilde (1) und dem jeweiligen Bauteil (2, 3) entsteht, aus einer in dem Flächengebilde (1) angeordneten Trennfolie (11),
**dadurch gekennzeichnet,**
**dass** die Konstruktion des Flächengebildes (1) aus sieben Schichten (11-13) aufgebaut ist, dass die beiden äußeren Schichten als Haftkleber oder Klebefolie (12) ausgestaltet sind und dass die nächstfolgende Schicht, die nach den beiden äußeren Schichten (12) angeordnet sind, als Schaumschichten (13) aus PE-Schaum ausgestaltet sind, dass die Schaumschichten (13) des Flächengebildes (1) mittels weiterer Klebeschichten (12) mittig mittels einer reißfesten Folie (11) verbunden sind, dass beim Ziehen des Flächengebildes (1) vorzugsweise in dessen Querrichtung (6), dieses innerhalb des Schichtaufbaus in der Schaumschicht (13) zerstört ist.

2. Flächengebilde nach Anspruch 1,
**dadurch gekennzeichnet,**
**dass** in dem Flächengebilde (1) gleiche oder unterschiedliche Verteilung von Adhäsionskräften vorgesehen ist, die eine definierte Klebefestigkeit mit dem jeweiligen an diesen anliegenden Bauteilen (2, 3) bzw. der Trennfolie (11) aufweisen.

3. Flächengebilde nach Anspruch 2,
**dadurch gekennzeichnet,**
**dass** als Trennfläche PE-Schaum (13) vorgesehen ist, der beidseitig mit Acrylat (6) als Klebstoff beschichtet ist und dass die Trennfolie (11) aus einem PET-Werkstoff gefertigt ist.

4. Flächengebilde nach einem der vorgenannten Ansprüche,
**dadurch gekennzeichnet,**
**dass** an dem Flächengebilde (1) eine Haltelasche (14) angeformt ist, die aus den beiden miteinander zu verbindenden Bauteilen (2, 3) übersteht und die fluchtend zu der Längsrichtung des Flächengebildes (1) ausgerichtet ist.

5. Flächengebilde nach einem der vorgenannten Ansprüche,
**dadurch gekennzeichnet,**
**dass** das Flächengebilde (1) zur Verbindung eines Displays (3) mit einer Blende (2), die vorzugsweise aus Glas oder aus einem Kunststoff gefertigt ist, dient, dass das Flächengebilde (1) von der Blende (2) und dem Display (3) durch Aufbringen einer Zugkraft (15) lösbar ist und dass beim Herausziehen des Flächengebildes (1) von der Blende (2) bzw. dem Display (3) das Flächengebilde (1) durch die Einleitung der Zugkraft zur Auflösung der Klebeverbindung in der Schaumschicht (13) aufreißt.

6. Flächengebilde nach Anspruch 1,
**dadurch gekennzeichnet,**
**dass** die Klebekräfte im Flächengebilde (1) bzw. zu den Bauteilen (2, 3) hin größer sind als der innere Zusammenhalt der Schaumschicht (13).

## Claims

1. A fabric (1) for connecting and attaching two opposite surfaces (4, 5) of two components (2, 3), comprising two foam layers (13) facing the particular surface (4, 5), each of which has an adhesive surface (12) by means of which an adhesive connection (6) is produced between the fabric (1) and the corresponding component (2, 3), comprising a separating foil (11) arranged within the fabric (1),
**characterised in that,**
the construction of the fabric (1) is made of seven layers (11 - 13), that the 2 outer layers are configured as adhesive or adhesive foil (12) and that the layers after that, which are arranged following the two outer layers (12), are configured as foam layers (13) comprising PE foam, that the foam layers (13) of the fabric (1) are connected by additional adhesive layers (12) in the middle by means of a tear-resistant foil (11), and that when the fabric (1) is pulled, preferably in its transverse direction (6), this fabric (1) is destroyed within the layer structure in the foam layer (13).

2. The fabric in accordance with Claim 1,
**characterised in that,**
an equal or different distribution of adhesive forces is provided in the fabric (1), with a defined adhesive strength against the particular adjacent components (2, 3) or separating foil (11).

3. The fabric in accordance with Claim 2,
**characterised in that,**
PE foam (13) is provided as the separating surface, with a coating of acrylate (6) on both sides as adhesive, and that the separating foil (11) is produced from a PET material.

4. The fabric in accordance with one of the aforementioned claims,
**characterised in that,**
a holding lug (14) is formed on the fabric (1), which projects beyond the 2 components (2, 3) to be connected together, and is aligned in the longitudinal direction of the fabric (1).

5. The fabric in accordance with one of the aforementioned claims,
**characterised in that,**
The fabric (1) is used for connecting a display (3) to a panel (2), preferably produced from glass or a plastic, that the fabric (1) can be released from the panel (2) and the display (3) by applying a tensile force (15), and that when the fabric (1) is pulled out of the panel (2) or the display (3), the fabric (1) tears apart in the foam layer (13) as a result of the tensile force being applied in order to release the adhesive connection.

6. The fabric in accordance with Claim 1,
**characterised in that,**
The adhesive forces in the fabric (1) or towards the components (2, 3) are greater than the internal cohesion of the foam layer (13).

## Revendications

1. Forme (1) servant au raccordement et à la fixation de deux surfaces opposées (4, 5) de deux composants (2, 3), comprenant deux couches de mousse (13) donnant sur la surface respective (4, 5), qui possèdent respectivement une surface collante (12) formant un assemblage collé (6) entre la forme (1) et le composant respectif (2, 3), et d'une feuille de séparation (11) disposée dans la forme (1),
**caractérisée en ce que**
la structure de la forme (1) est formée par sept couches (11-13), que les deux couches extérieures sont conçues en tant que masse auto-adhésive ou en tant que feuille de collage (12) et que les couches suivant directement les deux couches extérieures (12) sont réalisées en couches de mousse (13) en mousse PE, qu'à l'aide d'autres couches collantes (12) et moyennant une feuille résistant au déchirement (11), les couches de mousse (13) de la forme (1) sont liées au milieu, et qu'à la traction de la forme (1) de préférence dans son sens transversal (6), celle-ci est détruite à l'intérieur de la structuration dans la couche de mousse (13).

2. Forme d'après la revendication 1
**caractérisée en ce que**
dans la forme (1), est prévu une répartition homogène ou différente des forces d'adhérence qui possèdent une force de collage définie aux composants respectifs (2, 3) portant sur celle-ci, ou à la feuille de séparation (11).

3. Forme d'après la revendication 2
**caractérisée en ce que**,
en tant que surface de séparation, il est prévu de la mousse PE recouverte des deux côtés de produit acrylique (6) servant de colle, et que la feuille de séparation (11) est réalisée en un matériau PETP.

4. Forme d'après une des revendications précédentes
**caractérisée en ce que**
sur la forme (1), il est formé une éclisse de retient (14) saillant au-delà des deux composants à lier ensemble (2, 3) et qui se trouve en alignement précis par rapport à la direction longitudinale de la forme (1).

5. Forme d'après une des revendications précédentes
**caractérisée en ce que**
la forme (1) sert au raccordement d'un écran (3) avec un cadre (2) réalisé de préférence en verre ou en matière synthétique, que la forme (1) se laisse séparer du cadre (2) et de l'écran (3) en exerçant une force de traction (15), et qu'à la séparation de la forme (1) du cadre (2) ou de l'écran (3), la forme (1) est déchirée par l'exécution de la force de traction visant la dissolution de l'assemblage collé dans la couche de mousse (13).

6. Forme d'après la revendication 1
**caractérisée en ce que**
les forces de collage dans la forme (1) ou vers les composants (2, 3) sont supérieures à l'adhérence intérieure de la couche de mousse (13).
